# EUROPEAN PATENT APPLICATION

(11) **EP 0 529 344 A2**
(43) Date of publication of application: **03.03.1993**
(21) Application number: 92113134.8
(22) Date of filing: 31.07.1992
(51) Int. Cl.: G06F 11/00

(54) **Fault-tolerant system**

(30) Priority: 26.08.1991 JP 236887/91
(71) Applicant: MITSUBISHI DENKI KABUSHIKI KAISHA, Tokyo 100 (JP)
(72) Inventor: Kataoka, Isaburou, c/o MITSUBISHI DENKI K.K., Nagasaki-shi, Nagasaki (JP)
(74) Representative: KUHNEN, WACKER & PARTNER

(57) **Abstract**

The present invention aims at obtaining a fault-tolerant system of low cost and high reliability which system permits a smooth change-over of processing in the event of occurrence of a fault. The fault-tolerant system is provided with a plurality of processors each having a program area and a data area in which is set information indicating a portion of an input/output section required in the program in the program area, and is also provided with a control station for controlling those processors. Upon detection of a non-executable state of a module in a certain processor, the control station supplies to another processor the program in that module as well as information which indicates a required portion of the input/output section, and instructs the another processor to continue the execution of that module.

## Description

### BACKGROUND OF THE INVENTION

### Field of the Invention

The present invention relates to a fault-tolerant system to be applied to a process control or the like which is required to make a continuous control.

### Description of the Prior Art

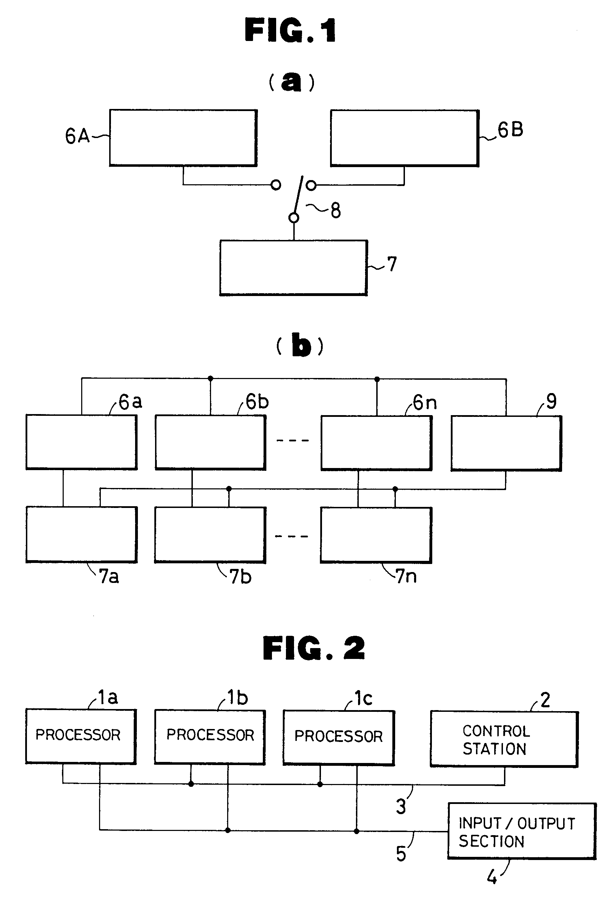

Fig. 1 illustrates a conventional redundant system applied to a control system for which is required high reliability. Fig. 1(a) shows a dual system, in which the reference numerals 6A and 6B each denote a processor having an operation section and a memory section; the numeral 7 denotes an input/output section for outputting data from the processors 6A and 6B to the exterior and taking external data therein; and numeral 8 denotes a switching portion for connecting the processors 6A and 6B selectively to the input/output section 7.

Fig. 1(b) shows a stand-by system, in which the numerals 6a to 6n each denote a processor having an operation section and a memory section; numerals 7a to 7n each denote an input/output section; and numeral 9 denotes a back-up processor which operates in the event of fault or the like of any of the processors 6a to 6n.

The operation will now be described. In the dual system, one of the processors 6A and 6B is connected to the input/output section and provides output data to and obtains input data from the input/output section 7. At this time, both processors 6A and 6B execute the same processing and exchange data at a predetermined time point. Both are synchronized with each other and crosscheck is made. The processor which is judged to be faulty as a result of the crosscheck is removed from the system.

On the other hand, in the stand-by system, the processors 6a to 6n are connected to the input/output sections 7a to 7n which correspond to the processors 6a to 6n, respectively. The processors 6a - 6n each perform a predetermined processing, then provides output data to and obtain input data from the input/output sections 7a - 7n. In the event of fault of any of the processors 6a - 6n, the back-up processor 9 executes the processing on behalf of the faulty processor.

The conventional redundant system is constructed as above, so in the dual system, it is required for the processors 6A and 6B to have the same hardware configuration, thus resulting in that the cost becomes high as a whole. And in the stand-by system, in the event of fault of two or more processors out of n number of processors 6a - 6n, it becomes impossible to continue the processing as the system.

### SUMMARY OF THE INVENTION

The present invention has been accomplished for overcoming the above-mentioned problems of the prior art, and it is the object of the invention to provide a fault-tolerant system capable of realizing a control system or the like which is low in cost and highly durable against fault.

The fault-tolerant system of the present invention is provided with a plurality of processors connected to an input/output section and each containing at least one module, the module having a program area in which a program is set and a data area containing information set therein, the information indicating a portion of the input/output section which the module itself requires, the processors each inputting necessary data from the input/output section, executing the program set in the module and providing output data to the input/output section, and is also provided with a control station connected to those processors which control station, in the event of a non-executable state of the program of the module contained in any of the plural processors, supplies to another processor the program of that module and information indicating a portion of the input/output section which the module requires, and instructs the another processor to also execute that program.

The control station used in the present invention detects a faulty processor or a module which has become non-executable due to a local trouble of a processor, and provides the program of the module which has become non-executable to another processor together with information indicating a portion of the input/output section which the said module requires. Then, the control station causes the another processor to execute that module to eliminate the trouble.

### BRIEF DESCRIPTION OF THE DRAWINGS

Fig. 1 is a block diagram showing a conventional redundant system;
Fig. 2 is a block diagram showing a fault-tolerant system according to an embodiment of the present invention;
Fig. 3 is an explanatory view showing a module configuration example; and
Fig. 4 is an explanatory view for explaining a channel use right.

### DETAILED DESCRIPTION OF THE PREFERRED EMBODIMENT

An embodiment of the present invention will be described hereinunder with reference to the accompanying drawings.

In Fig. 2, the reference numerals 1a to 1c each denote a processor having one or plural modules high in autonomy of program and data, and also having a buffer in which are set module states corresponding to each module. The numeral 2 denotes a control station. The control station 2 has information indicating the programs of the modules to be executed by the processors 1a to 1c and also indicating addresses corresponding to portions of an input/output section 4 which the modules require out of plural addresses allocated to the input/output section 4. Numeral 3 denotes a passage of information (hereinafter referred to as "A-channel") which is transferred between the control station 2 and the processors 1a - 1c.

The input/output section 4 has an output portion for the output of data to the exterior and an input portion for taking in data from the exterior. To the input/output section 4 are allocated a plurality of addresses according to portions from which the input/output section inputs data and portions to which it outputs data. The input/output section 4 is further provided with a control portion for allocating a channel use right to each of the processors 1a - 1c in compliance with a channel request from each processor. Numeral 5 denotes a passage of information (hereinafter referred to as "B-channel") which is transferred between the input/output section 4 and each of the processors 1a - 1c.

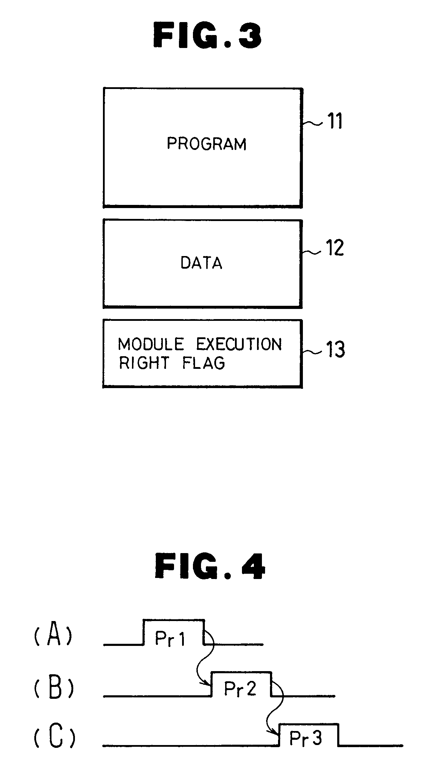

The operation will now be described. Each of the processors 1a - 1c has a module of, for example, such a structure as shown in Fig. 3. As illustrated therein, the module includes a program area 11 in which is set object code of the program to be executed, a data area 12 in which are set addresses (hereinafter referred to as "input allocation address" or "output allocation address") corresponding to the portion of the input/output section 4 associated with that module and in which are stored data read from the input portion and data to be written into the output portion, and a flag area 13 in which is set a module execution right flag for instruction whether the module is to be executed or not. Each of the processors 1a - 1c executes the module contained therein, that is, executes the program set in the module. At this time, a running state and an abnormal state of the processor as well as a register state of the processor which is considered necessary for monitoring the control station, are set in a buffer. The size of the buffer is determined according to the cycle with which the control station 2 reads out the buffer for monitoring.

Each of the processors 1a - 1c issues a channel request signal to the input/output section 4 for obtaining input data which the module in the processor requires prior to execution of the module. Upon receipt of the channel request signal, the input/output section 4 sends back a channel OK signal and gives a channel use right to the processor if the B-channel 5 is vacant.

Upon receipt of the channel OK signal, the one of the processors 1a - 1c which has issued the channel request signal transmit the input allocation addresses of the module to be executed successively to the input/output section 4, which in turn sends out input data corresponding to the input allocation addresses to the B-channel 5. Then, the processor which has issued the channel request signal input the data from the B-channel 5 and set them in predetermined portions of the respective data area 12.

The control portion of the input/output section 4 also makes arbitration for the channel requests issued by the processors. For example, when the control portion detects a channel request signal from the processor 1b while the processor 1a uses the B-channel 5, it keeps the processor 1b waiting, and when the use of the B-channel 5 by the processor 1a is over, the control portion issues a channel OK signal to the processor 1b. Fig. 4 shows that the processors 1a, 1b and 1c obtain the channel use right successively in this order, provided in the figure the processors are represented as Pr1, Pr2 and Pr3, respectively.

After the end of execution of the module, each of the processors 1a - 1c writes the results of the execution into the output portion of the input/output section 4. More specifically, upon receipt of a channel OK signal after the issuance of a channel request signal, each processor sends out to the B-channel 5 the output data set in a predetermined portion of the data area 12 while issuing the output allocation addresses in the data area 12 successively. The output portion of the input/output section 4 takes in the data from the B-channel 5 and writes it in the area corresponding to the output allocation addresses. In this state, the control station 2 collects information from the buffers of the processors 1a - 1c at a predetermined cycle. In the event of occurrence of a serious problem which does not permit, for example, the processor 1a to continue the processing, the control processor 2 detects this state from the collected information.

The control station 2 then inhibits the processor 1a from using the B-channel 5 and transfers the program as well as the input and output allocation addresses of the module which the processor 1a has taken charge of, to the processor 1b adjacent to the processor 1a. Upon confirming the exact transfer, the control station 2 instructs the processor 1b to execute that module (for example, turns on a module execution right flag). In this way the module which the processor 1a has taken charge of is transferred to the processor 1b. Thereafter, the processor 1b executes the newly added module after execution of the module already present therein.

In the case where the processor 1a has a plurality of modules and in the event of occurrence of a local trouble in the processor 1a (for example, trouble of only a certain local memory area), only the module which has become non-executable due to the said trouble can be transferred to the processor 1b. In this case, as soon as the control station 2 detects the non-executable state of a certain module in the processor 1a from the information collected through the A-channel 3, the control station transfers the program, etc. of that module to the processor 1b adjacent to the processor 1a, then turns off the module execution right flag of that module in the processor 1a and turns on the module execution right flag of that module in the processor 1b. In this way the module in question is transferred to the processor 1b and then executed by the processor 1b.

Although the fault-tolerant system of the above embodiment has three processors 1a to 1c, the number of processors is not specially limited if only it is plural.

As set forth above, the fault-tolerant system according to the present invention is constructed in such a manner that when it becomes impossible to continue the execution of a certain module which a certain processor takes charge of, the program as well as input and output allocation addresses of that module are fed to another processor, which in turn continues the execution of that module. Consequently, there can be attained a fault-tolerant system of low cost capable of smoothly coping with a fault upon occurrence.

## Claims

1. A fault-tolerant system including:
an input/output section for outputting written data to the exterior and keeping data obtained from the exterior;
a plurality of processors connected to said input/output section and each containing one or plural modules, the modules each having a program area in which a program is set and a data area containing information set therein, the information indicating a portion of said input/output section which the module itself requires, said processors each executing the program of said module(s); and
a control station connected to said plural processors which control station, in the event of a non-executable state of the program of a module contained in any of the plural processors, supplies to another processor included in the plural processors the program of said module and information indicating a portion of said input/output section which said module requires, and instructs said another processor to execute said program.

2. A fault-tolerant system according to claim 1, wherein each said processor sets the information of the processor into a buffer during execution of a module present therein, and said control station reads the state of each said processor from the contents of said buffer.

3. A fault-tolerant system according to claim 2, wherein said control station transfers the program as well as input and output addresses of the faulty processor to a normal processor included in the plural processors and instructs said normal processor to execute the program.

4. A fault-tolerant system according to claim 2, wherein said control station transfers the program as well as input and output addresses of a module present in the faulty processor to a normal processor included in the plural processors and instructs said normal processor to execute the program of said module.
